# EUROPEAN PATENT SPECIFICATION

(11) **EP 1 824 703 B1**
(45) Date of publication and mention of the grant of the patent: **16.02.2011**
(21) Application number: 05804140.1
(22) Date of filing: 21.11.2005
(51) Int. Cl.: B60R 16/04, H02J 7/00, H02J 7/14

(54) **CIRCUIT FOR DISTRIBUTION OF ENERGY**
KREISLAUF ZUR VERTEILUNG VON ENERGIE
CIRCUIT DE DISTRIBUTION D'ENERGIE

(30) Priority: 25.11.2004 SE 0402874
(43) Date of publication of application: 29.08.2007
(73) Proprietor: Aros Electronics AB, S-431 53 Mölndal (SE)
(72) Inventor: HELLSTRÖM, Jerker, S-449 44 Nol (SE)
(74) Representative: Edlund, Fabian
(86) International application number: PCT/SE2005/001742
(87) International publication number: WO 2006/057595

(56) References cited:
- DE-A1- 10 057 259
- DE-A1- 10 200 466
- DE-A1- 10 361 743
- US-A- 5 479 083
- US-B1- 6 384 489

## Description

### Technical field

The present invention relates to a circuit for distribution of energy for an electric system in a motor vehicle.

### Technical background

The development these days to run existing components in a vehicle construction electrically rather than mechanically (e.g., belt drive), and the development of new electrically run components have considerably raised the total need for electrical effect in electric systems for motor vehicles. It is more and more difficult to supply this need for effect by the use of conventional electric 12-volt systems with a 14-volt generator because an increased effect at a retained voltage demands that the electric current is increased. This increase of current strength results in that many components in a conventional electric system must be replaced. In particular, the electric wiring must be of a greater diameter that makes it more space requiring and causes an undesired increase of weight of the vehicle.

In order to solve this problem it has been suggested to use a 42-volt system instead. Such a high feeding voltage is suitable for electricity consumers demanding high effect, such as e.g. cranking motors, control of vehicle compartment temperature, servo-motors, defrosting of window panels and electrically driven turbo-feeding. For components with low effect, such as e.g. lighting and other sensible components is it, however, more suitable to keep the 12-volt system of today. The conventional way to solve this problem is to use two voltage sources with different voltages but with a common ground. This can be done by using a system with a battery comprising a number of cells connected in series, having several voltage taps.

The document DE 100 57259 A discloses the preamble of claim 1.

One other example of such a solution is shown in US 5,164,273. Electricity consumers demanding high effect are connected to a circuit that comprises a connection in series of all battery cells in the battery in order to provide a high feeding voltage. Consumers demanding a lower, but stable, voltage are connected to another circuit that comprises a connection in series of only a limited number of the battery cells so that one in that way provides a low feeding voltage. However, the in US 5,164,273 suggested solution creates problems when an electricity consumer demanding high effect is started. Such a connection causes the generator of the vehicle to reach the current limit, whereupon the voltage over the cells in the battery drops. For a conventional lead cell being charged the voltage drops from about 2,4 V to about 2 V. This imply that consumers that are sensitive to voltage variations, such as e.g. the headlights of the vehicle and instrument panel lights, are affected, which by the driver is experienced as a quick reduction of light intensity. This quick reduction of light intensity is experienced by the driver as a disturbing distraction and may lead to that the driver's attention is turned away from the traffic environment, which, in turn, may cause accidents.

A system of this kind also suffers from the problem that the different parts of the battery are not equally loaded and that the load is not symmetrical. This lowers the available effect and may also harm the battery.

An alternative solution is shown in US 6,384, 489. Here is suggested an electric circuit with two batteries that are not connected in series, that have a common ground and that are equipped with one feeding circuit each for consumers with high and low feeding voltage, respectively. The feeding circuit for consumers and low feeding voltage are, via direct current converters, connected to the circuit for consumers with high feeding voltage. The direct current converters convert the voltage to the low voltage level for consumers demanding low feeding voltage. The circuits are connected to a common generator that charges both batteries. The in US 6,384,489 suggested solution is space and weight requiring, however, since it comprises two separate batteries and direct current converters. Further, the use of conventional direct current converters implies that only a limited current strength can be reached at the output side of the current converter because conventional direct current converters are dimensioned for a certain current strength and equipped with over-current protection. This constitutes a problem since it e.g. at short-circuits in the circuit for low feeding voltage is important to be able to output a high current to this circuit in order to burn fuses.

### Summary of the invention

It is a purpose of the invention to mitigate at least some of the problems mentioned above by providing an improved circuit for distribution of energy for an electric system in a motor vehicle.

Another purpose of the invention is to provide an improved electric system that at least mitigates one of the problems mentioned above.

These and other purposes, which will be apparent from the following description, are fulfilled by a circuit for distribution of energy and an electric system having the distinctive features that are defined in the appended claims. Preferred embodiments are explained in the dependent claims.

According to a first aspect of the present invention is provided a circuit for distribution of energy for an electric system in a motor vehicle, which system comprises two voltage sources which are connected in series, wherein a first voltage branch connector is connected between the two voltage sources and a second voltage branch connector is connected to the voltage sources so that it, when used, has a higher voltage level than the first voltage branch connector, wherein said circuit for distribution of energy is connected between the second voltage branch connector, the first voltage branch connector and ground, wherein said circuit for distribution of energy is arranged to transmit charge from a first voltage source to a second voltage source by alternately creating a first current flow through the first voltage source and the circuit for distribution of energy in the discharging direction of the first voltage source, and a second current flow through the second voltage source and the circuit for distribution of energy in the charging direction of the second current source.

The invention is based on the insight that energy can be distributed between two voltage sources by alternately provide a first current flow through the first voltage source in its discharging direction (hence, the current is impelled by the first voltage source) and a second current flow through a second voltage source in its charging direction (hence, the current charges the second voltage source).

The circuit for distribution of energy according to the invention allows for better battery utilisation and contributes to a more even load, and thereby less wear, of the battery cells.

According to one embodiment of the invention the circuit for distribution of energy comprises an element for storage of energy, which is arranged to be charged by the first current flow and thereafter to discharge and to run the second current flow. This is a simple way of realising the alternating current flows. The element for storage of energy further in an advantageous way allows for the transmitted charge to be controlled and for the risk for short-circuit and over-charge is reduced.

Preferably, said element for storage of energy is an inductor. An inductor as an element for storage of energy may advantageously be used because inductors are good charge carriers and generally available electric components.

The circuit for distribution of energy is preferably provided with a control unit that is arranged to control the alternation between the first current flow and the second current flow. By the help from such a control unit the two current flows can be initiated and ended in an optimal way for the transfer of charge between the batteries that are used.

Preferably, said alternation between the first current flow and the second current flow occurs at a frequency of at least 5 kHz. This allows for the size of the components in the circuit for distribution of energy to be limited and that unnecessary weight is not added to the vehicle.

The circuit for distribution of energy may further comprise two switches of which each is provided with or connected to a diode, wherein said control unit alternates between the first current flow and the second current flow by alternately connecting and disconnecting the switches. By the help from such an arrangement a simple but well functioning control of alternation of the two current flows is achieved. It is in this context preferred to perform said two switches as power transistors.

The circuit can, further, be arranged to receive two voltage values from the two voltage sources, determine whether there is a difference between the average voltage over the cells in the voltage sources, respectively, and, if such a difference exists, control a transmission of charge from the voltage source with the highest average cell voltage to the voltage source with the lowest average cell voltage, so that the cells in both voltage sources get equal average voltage. By the help from using a voltage difference between the two voltage sources as a starting point it is secured that a voltage transmission between the voltage sources is motivated and does not occur unnecessarily.

The circuit can, further, be arranged to determine whether there is a sudden change of the feeding current in the second voltage branch connector, and, if such a sudden change exists, control a transmission of charge from the voltage source between the first and second voltage branch connector to the voltage source between the first voltage branch connector and ground, so that the voltage over the voltage source being arranged between the first voltage branch connector and ground for a determined period of time shows a continuous change. This way, it is secured that the electricity consumers with low effect that are connected to the first voltage branch connector/voltage source only experience a slowly changed voltage level and, thereby, only a slow change of the delivered effect. For a user, e.g. the driver of the vehicle, is therefore no disturbance experienced, such as e.g. an abrupt change of the light intensity of the headlights, which disturbance may be perceived as a reduction of vehicle functionality.

Such a change of the feeding current can be determined by receiving at least two successive voltage values from the second voltage branch connector via a current measuring instrument. By arranging a current measuring instrument at the second voltage branch connector and letting the control unit receive signals from it is achieved a direct measurement of how the feeding current in the second branch connector is changed. Subsequently, a direct control of charge transmission between the voltage sources can be achieved.

The change of the feeding current can, alternatively, be determined by receiving at least two successive voltage values from the voltage source being arranged between the first voltage branch connector and ground. A voltage drop indicates that the current in the second branch connector is increased. This way, a structurally more simple circuit for distribution of energy may be provided since there is no need for a current measuring instrument.

Preferably, the circuit for distribution of energy is arranged to perform the continuous change of voltage during 2-10 seconds. By letting the change of voltage at the voltage source that is connected between the first voltage branch connector and the ground connector occur during a time period of this length, the risk that voltage changes of the electricity consumers with low effect is perceived by the driver as a disturbing moment is reduced. Rather, there is a great likelihood that the driver does not note the change of voltage at all.

According to another aspect of the invention is provided an electric system comprising two voltage sources, a first and a second voltage branch connector, a ground connector, and a generator, which generator is connected to the first or to the second voltage branch connector, wherein a circuit for distribution of energy according to anyone of the preceding claims is connected between the first voltage branch connector, the second voltage branch connector and the ground connector. Hereby an improved electric system that allows for a better utilisation of battery and contributes to a more even load, and thereby less wear, of the battery cells is provided. A connection of the generator to the first branch connector is e.g. suitable if one wants to equip a vehicle with an electricity consumer that demands a lot of current and if one wants to do this without other changes of the electric system than installing another voltage source. Connection of the generator to the second voltage branch connector is e.g. suitable when one already at the time of construction of a vehicle wants to adapt the electric system to run electricity consumers at two different voltage levels.

Preferably, said voltage sources comprise lead batteries.

### Short description of the drawings

The present invention will now be described in more detail with reference to the accompanying drawings in which:
fig 1 is a circuit diagram showing a circuit for distribution of energy according to one embodiment of the invention that is connected in an electric system for a vehicle;
fig 2 is a circuit diagram showing a circuit for distribution of energy according to one embodiment of the invention that is connected in another electric system for a vehicle;
fig 3a is a circuit diagram showing a current flow in an electric system comprising a circuit for distribution of energy according to one embodiment of the invention;
fig 3b is a circuit diagram showing another current flow in an electric system comprising a circuit for distribution of energy according to one embodiment of the invention;
fig 4a is a circuit diagram showing yet another current flow in an electric system comprising a circuit for distribution of energy according to one embodiment of the invention;
fig 4b is a circuit diagram showing yet another current flow in an electric system comprising a circuit for distribution of energy according to one embodiment of the invention;
fig 5 is a schematic diagram of changes of current and voltage at a voltage source in an electric system comprising a circuit for distribution of energy according to one embodiment of the invention.

### Detailed description of the invention

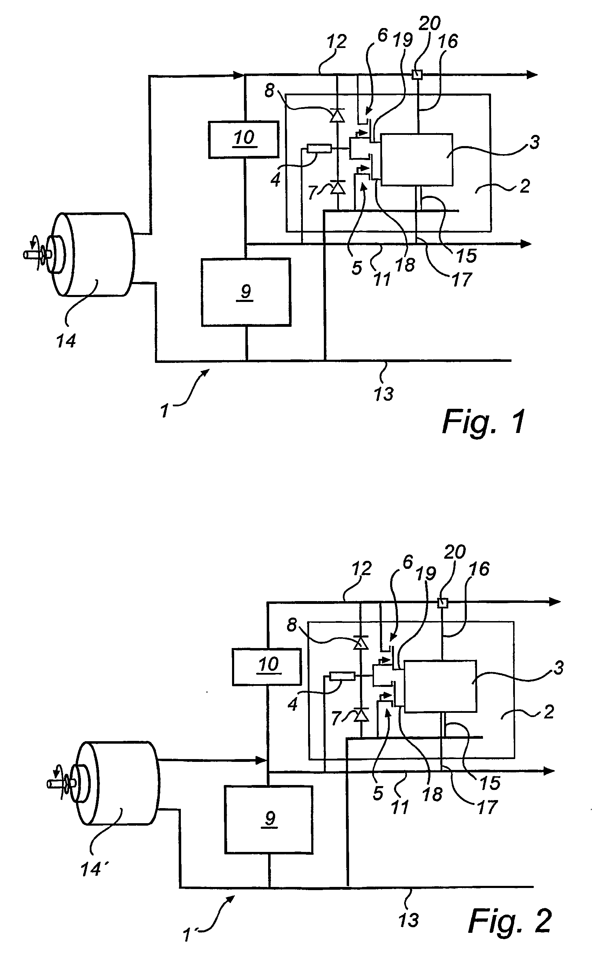

Fig 1 is a circuit diagram showing an electric system 1 for a vehicle, comprising a circuit 2 for distribution of energy according to a preferred embodiment of the invention. The circuit 2 for distribution of energy comprises a control unit 3, which preferably comprises a microprocessor. Moreover, circuit 2 for distribution of energy comprises an element for storage of energy in the form of an inductor 4, two switches in the form of power transistors 5 and 6, and two diodes 7 and 8, connected in parallel to the transistors 5, 6. The control unit 3 is connected to the gates 18, 19 of the transistors and is arranged to open and close respective transistors 5, 6.

The electric system 1 comprises, except for the circuit 2 for distribution of energy, also two lead batteries 9 and 10 which are connected in series after one another, a first voltage branch connector 11 arranged between the two voltage sources, a second voltage branch connector 12 connected to the lead batteries 9 and 10 so that it, when used, has a higher voltage level than the first branch connector 11. The first voltage branch connector 11 is connected to electricity consumers that demand a low feeding current, such as e.g. lighting and sensitive electronic equipment, while the second voltage branch connector 12 is connected to electricity consumers that demand a high feeding voltage, such as e.g. cranking motor and electrically driven turbo-feeding. Further, a ground connector 13 is comprised in the electric system 1. The ground connector has a branch that extends into the circuit 2 for distribution of energy. A generator 14, which is connected between the second voltage branch connector 12 and ground connector 13, is also comprised in the electric system 1. The voltage between the first voltage branch connector 11 and the ground connector 13 is preferably 12-14 V, and the voltage between the second voltage branch connector 12 and the ground connector 13 is preferably 24-42 V.

The circuit 2 for distribution of energy is connected to the electric system in the following way: the first voltage branch connector 11 is connected to the inductor 4; the second voltage branch connector 12 is connected to the cathode of the anode 8 and the drain of the transistor 6; and the ground connector 13 is connected to the anode 7 of the diode and the source of the transistor 5. Further, the control unit 3 is voltage fed by the first voltage branch connector via a connection connector 17 and is grounded via a connection connector 15.

In a special embodiment of the invention the second voltage branch connector 12 is equipped with a current measuring instrument 20, which is connected to the control unit 3 via a connection connector 16.

Fig 2 is a circuit diagram which shows an alternative electric system 1' for a vehicle, comprising a circuit 2 for distribution of energy of the same type as is shown in fig 1. Different from the embodiment shown in fig 1, the generator 14' in the circuit diagram according to fig 2 is connected between the first voltage branch connector 11 and the ground connector 13.

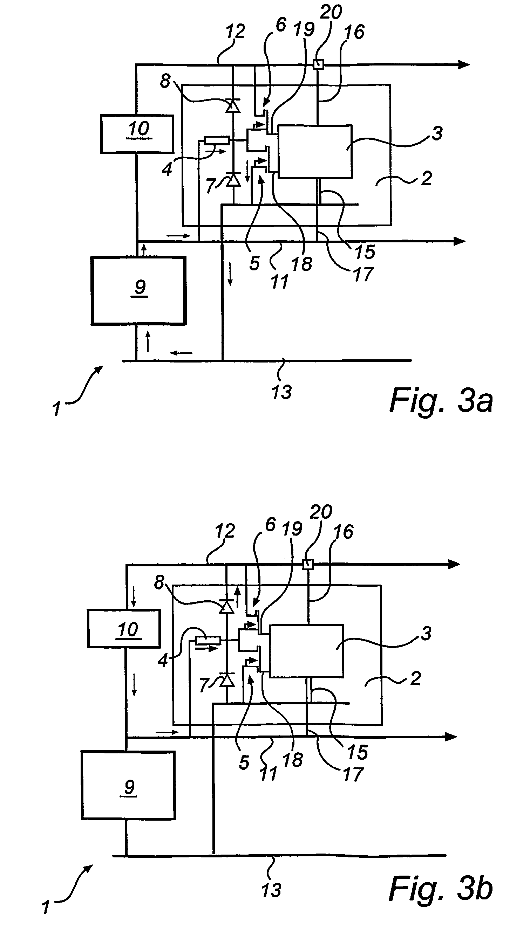

Fig 3a-3b show current flows in an electric system 1 of the type shown in fig 1. The current flow is in the figures indicated by arrows. In fig 3a the current passes by in the discharging direction from the positive pole of the lead battery 9 via the first branch connector 11 into the circuit 2 for distribution of energy. Thereafter, the current flow charges the inductor 4, passes further through the initiated power transistor 5, through the ground connector 13 and back into the lead battery 9 via the negative pole.

In fig 3b the current passes by in the charging direction of the lead battery 10 from the charged inductor 4, further through the diode out of the circuit 2 for distribution of energy to the second voltage branch connector 12. Thereafter, the current flow passes the lead battery 10 via the positive pole, after which the battery is loaded, and the current flow thereafter passes out via the negative pole, through the first branch connector 11 and back into the circuit 2 for distribution of energy to the inductor 4.

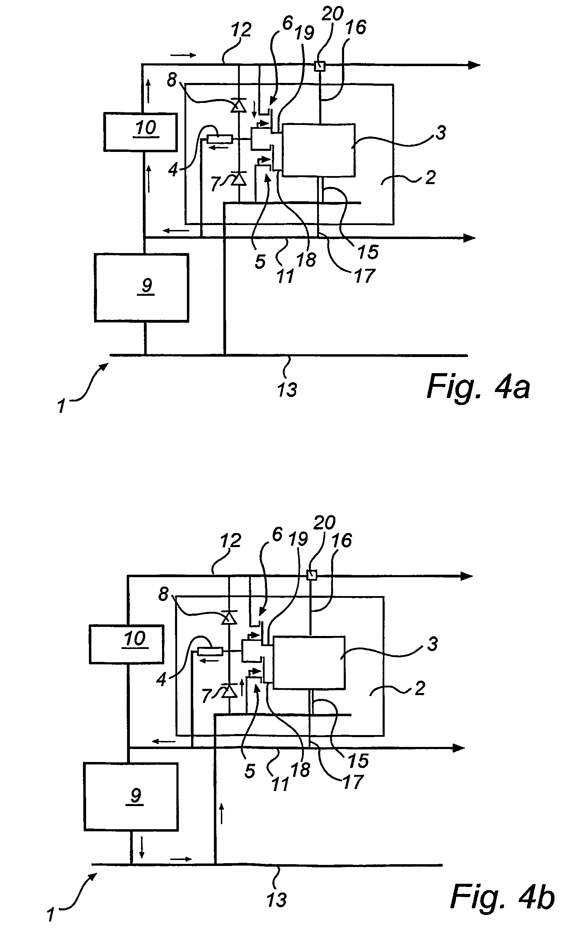

Fig 4a-4b show current flows in an electric system 1 of the type shown in fig 1. The current flow is in the figure indicated by arrows. In fig 4a the current passes by in the discharging direction from the positive pole of the lead battery 10 via the second branch connector 12 into the circuit 2 for distribution of energy. Thereafter, the current flow passes through the initiated power transistor 6, charges the inductor 4, passes further through the first branch connector 11 back into the lead battery 10 via the negative pole.

In fig 4b the current passes by in the charging direction of the lead battery 9 from the charged inductor 4, further out of the circuit 2 for distribution of energy to the first branch connector 11. Thereafter, the current flow charges the lead battery 9 via the positive pole, passes out via the negative pole, through the ground connector 13 and back into the circuit 2 for distribution of energy and through the diode 7.

In the following the functionality of the circuit 2 for distribution of energy will be explained in more detail with reference to fig 1-5. The circuit 2 for distribution of energy can have two main functions; to equalize the charging levels of the two lead batteries 9 and 10 so that the voltage over all battery cells in the two batteries are equal, and to, when an electricity consumer with high effect connected to the second voltage branch connector 12 is initiated, see to it that the subsequent voltage change of the lead battery 9 that is arranged between the first voltage branch connector 11 and the ground connector 13 is a stepless, continuous change that goes on for a determined period of time. The latter function is superior to the former, i.e., if charging equalization between the batteries 9 and 10 occurs when a large electricity consumer is turned on the charging equalization is interrupted and the function to see to it that the voltage change of the battery 9 that is arranged between the first branch connector 11 and the ground connector 13 is a continuous change takes over. It shall be noted that even if the circuit 2 for distribution of energy may have these two functions it does not have to be used for both. Applications where only one of the functions is used are possible.

The equalization of the charging levels of the two lead batteries 9 and 10 does not assume that the two batteries are such that they have to have an equal voltage level, i.e. being built up of the same number of battery cells. On the contrary, the control unit 3 is arranged to consider the number of battery cells in lead battery 9 and 10, respectively, and may in that way calculate the average cell voltage for each battery cell.

When a circuit 2 for distribution of energy that is comprised in an electric system 1 is used, the control unit 3 continuously receives voltage values from the two lead batteries. The voltage value for the lead battery 9 is received via the first connection connector 15 and the third connection connector 17. The voltage value for the lead battery 10 is received via the second connection connector 16 and the third connection connector 17.

The control unit compares the voltage values from the two lead batteries 9 and 10 and determines whether there is a difference between the average battery cell voltages for the two lead batteries. If that is the case, the control unit 3 initiates a transfer of charge from the lead battery with the highest average voltage value for the battery cells to the lead battery with the lowest average voltage value for the battery cells, so that the battery cells for the two batteries 9 and 10 gets the same charge.

With reference to fig 3a-3b is shown how this charging equalization is done in the case when the battery 9 has a higher average battery cell voltage than the battery 10. In fig 3a is shown how the control unit 3 keeps the power transistor 5 switched on, i.e., electrically conductive, and the power transistor 6 switched off, i.e., non-conductive. This causes a first current flow in the discharging direction for the lead battery 9, whereafter the battery 9 is discharged and the inductor 4 charged according to the arrows in the figure. When the inductor 4 is fully charged, or when the current has flown this way under a determined time period, this first current flow is interrupted by that the control unit 3 disconnects the power transistor 5. Thereafter, a second current flow comes up, according to what is shown in fig 3b. This second current flow discharges the inductor 4 via the diode 8 whereafter the battery 10 is charged. When the inductor 4 is fully discharged, or when the current has flown this way under a determined time period, also this second current flow is interrupted by that the control unit 3 keeps the power transistor 5 switched on. The power transistor 6 is switched off during the whole of this lapse. The first current flow, thus, discharges the lead battery 9, and the second current flow charges the lead battery 10.

The control unit 3 thereafter repeats the disconnection and connection, respectively, of the power transistors 5 and thereby again creates the two current flows in fig 3a and 3b. The charging equalization continues under a determined time period or until the average cell voltages for the two batteries 9 and 10 are of equal size. Preferably, the alternation between the first current flow and the second current flow occurs at a frequency of at least 5 kHz.

In fig 4a-4b the case is shown in which the control unit 3 has determined that the average voltage for the battery cells in the lead battery 10 is higher than in the lead battery 9. In fig 4a is shown how a discharging of battery 10 occurs in a way corresponding to the discharging shown in fig 3a, and in fig 4b is shown how a charging of battery 9 occurs in a way corresponding to the charging shown in fig 3b. Contrary from the lapses illustrated in fig 3a-3b, here it is the power transistor 6 that is switched on when the battery 10 is discharged and switched off when the battery 9 is charged. The power transistor 5 is switched off during the whole of this lapse. The first current flow, thus, discharges the lead battery 10 and the second current flow charges the lead battery 9.

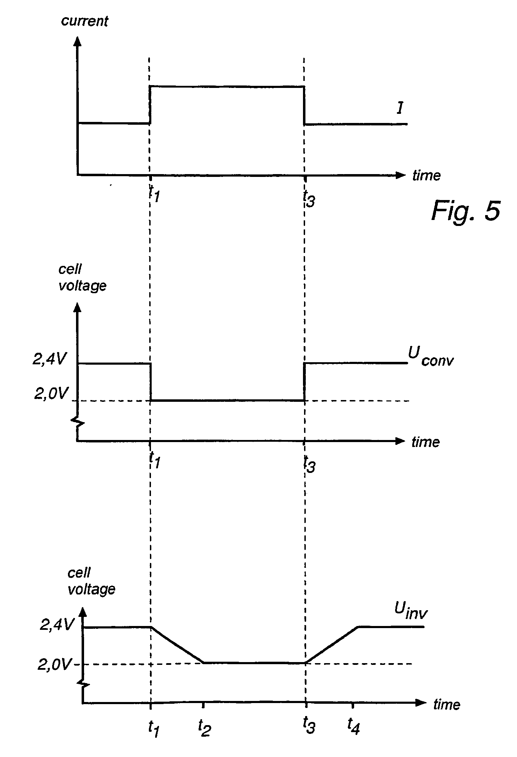

The second function of the circuit 2 for distribution of energy, when an electricity consumer with high effect that is connected to the second voltage branch connector 12 is switched on, to see to it that the voltage change of the battery 9 that is arranged between the first branch connector 11 and the ground connector 13 is continuous and stepless, is initiated with that the control unit 3 determines if there is a sudden change of the feeding current in the second voltage branch connector 12. In fig 5 is shown a schematic diagram of such sudden changes of the feeding current I. In the diagram the feeding current I that is output on the other voltage branch connector 12 suddenly increases at time t₁. Thereafter, at time t₃, the feeding current I decreases just as suddenly.

Further, fig 5 shows how the consequence of the increasing and decreasing feeding current I, respectively, increases and decreases, respectively, the cell voltage U_{conv} at time t₁ and time t₃ over two lead batteries in a conventional electric system 1. These voltage changes to the low and the high voltage levels, respectively, are immediate and occur in one single step. Because of the connection in series between the lead batteries the voltage changes occur at the same time in both lead batteries.

Finally, the third diagram in fig 5 shows how the cell voltage is changed by the help from a circuit for distribution of charging according to fig 1.

First, the control unit 3 determines that a current change has occurred in branch connector 12, e.g. by receiving two subsequent current values from the current measuring instrument 20 via connector 16. The control unit 3 compares these current values with each other, and, when a sudden increase I detected a transfer of charge is initiated from the lead battery 10 to the lead battery 9 by alternatively connect and disconnect, respectively, the power transistor 6 and thereby alternatively create the current flows according to fig 4a and 4b. The charging of the lead battery 9 goes on during a determined time period, preferably 2-10 seconds, whereafter the voltage reduction of the lead battery 9 occurs continuously during this time period, between t₁ and t₂ in fig 5.

In a corresponding fashion, a sudden decrease of the current in the second branch connector 12 is handled, typically caused by that an electricity consumer with high effect that is connected to the second branch connector 12 is switched off.

The control unit 3 now directs a transfer of charge from the lead battery 9 to the lead battery 10 by alternatively keep the power transistor 5 switched on and switched off, respectively, and thereby alternatively create the current flows according to fig 3a and 3b. The discharging of the lead battery 9 again occurs during a limited time period, preferably 2-10 seconds, whereafter the voltage increase of the lead battery 9 occurs continuously during this time period, between t₃ and t₄ in fig 4.

In an alternative embodiment of the invention, the control unit 3 determines said change of the feeding current in the second branch connector 12 by receiving at least two subsequent voltage values from the lead battery 9, and comparing these with one another. This is possible because a great change of the current in the second branch connector 12 because of the connection in series also affects the lead battery 9.

It is understood that a variety of modifications of the embodiment described above are possible within the scope of the invention, as is defined in the appended claims. For example, within the scope of the invention, also other voltage sources than lead batteries are possible, such as e.g. lithium ion batteries, hybrid batteries or capacitors. Also another element for storage of energy than an indictor, such as e.g. another type of coil, is possible within the scope of the invention.

## Claims

1. Circuit (2) for distribution of energy for an electric system (1; 1') in a motor vehicle, which system comprises:
two voltage sources (9, 10) which are connected in series, wherein a first voltage branch connector (11) is connected between the two voltage sources (9, 10) and a second voltage branch connector (12) is connected to the voltage sources (9, 10) so that it, when used, has a higher voltage level than the first voltage branch connector (11), **characterized by that**
said circuit (2) for distribution of energy is connected between the second voltage branch connector (12), the first voltage branch connector(11) and ground (13), wherein said circuit (2) for distribution of energy is arranged to transmit charge from a first voltage source (9, 10) to a second voltage source (10, 9) by alternately creating a first current flow through the first voltage source (9, 10) and the circuit (2) for distribution of energy in the discharging direction of the first voltage source (9, 10), and a second current flow through the second voltage source (10, 9) and the circuit (2) for distribution of energy in the charging direction of the second current source.

2. Circuit (2) for distribution of energy according to claim 1, further comprising element (4) for storage of energy, which is arranged to be charged by the first current flow and to be discharged by the second current flow.

3. Circuit (2) for distribution of energy according to claim 2, wherein said element (4) for storage of energy is an inductor.

4. Circuit (2) for distribution of energy according to anyone of the preceding claims, wherein said circuit (2) for distribution of energy is provided with a control unit (3) which is arranged to control the alternation between the first current flow and the second current flow.

5. Circuit (2) for distribution of energy according to claim 4, wherein said alternation between the first current flow and the second current flow occurs at a frequency of at least 5 kHz.

6. Circuit (2) for distribution of energy according to claim 4 or 5, further comprising two switches (5, 6) of which each is provided with or connected to a diode (7, 8), wherein said control unit (3) alternates between the first current flow and the second current flow by alternately connecting and disconnecting the switches (5, 6).

7. Circuit (2) for distribution of energy according to claim 6, wherein said two switches (5, 6) are two power transistors.

8. Circuit (2) for distribution of energy according to claim 4 to 7, wherein said control unit (3) is arranged to receive two voltage values from the two voltage sources (9, 10), determine whether there is a difference between the average voltage over the cells in the voltage sources (9, 10), respectively, and, if such a difference exists, control a transmission of charge from the voltage source (9, 10) with the highest average cell voltage to the voltage source (9, 10) with the lowest average cell voltage, so that the cells in both voltage sources (9, 10) get essentially equal average voltage.

9. Circuit (2) for distribution of energy according to claim 4 to 7, wherein said control unit (3) is arranged to determine whether there is a sudden change of the feeding current in the second voltage branch connector (12), and, if such a sudden change exists, control a transmission of charge from the voltage source (10) between the first (11) and second voltage branch connector (12) to the voltage source (9) between the first voltage branch connector (11) and ground, so that the voltage over the voltage source (9) being arranged between the first voltage branch connector (11) and ground (13) for a determined period of time shows a continuous change.

10. Circuit (2) for distribution of energy according to claim 9, wherein said control unit (3) is arranged to determine said change of the feeding current by receiving at least two successive voltage values from the second voltage branch connector (12) via a current measuring instrument (20).

11. Circuit (2) for distribution of energy according to claim 9, wherein said control unit (3) is arranged to determine said change of the feeding current by receiving at least two successive voltage values from the voltage source (9) being arranged between the first voltage branch connector (11) and ground (13).

12. Circuit (2) for distribution of energy according to any one of claim 9 to 11, wherein said continuous change occurs during 2-10 seconds.

13. Electric system (1; 1') comprising two voltage sources (9, 10), wherein a first voltage branch connector (11) is connected between the two voltage sources (9, 10) and a second voltage branch connector (12) is connected to the voltage sources (9, 10) so that it, when used, has a higher voltage level than the first voltage branch connector (11), and a generator (14; 14'), which generator (14; 14') is connected to the first (11) or to the second voltage branch connector (12), **characterised by** that a circuit (2) for distribution of energy according to anyone of the preceding claims is connected between the first (11) voltage branch connector, the second voltage branch connector (12) and the ground connector (13).

14. Electric system according to claim 14, wherein said voltage sources (9, 10) comprise lead batteries.

## Patentansprüche

1. Schaltung (2) zur Verteilung von Energie für eine elektrische Anlage (1; 1') in einem Kraftfahrzeug, wobei die Anlage umfasst:
zwei Spannungsquellen (9, 10), die in Reihe geschaltet sind, wobei ein erster Spannungsabzweigverbinder (11) zwischen den beiden Spannungsquellen (9, 10) angeschlossen ist und ein zweiter Spannungsabzweigverbinder (12) an die Spannungsquellen (9, 10) angeschlossen ist, so dass er bei Gebrauch einen höheren Spannungspegel als der erste Spannungsabzweigverbinder (11) aufweist, **dadurch gekennzeichnet, dass**
die Schaltung (2) zur Verteilung von Energie zwischen dem zweiten Spannungsabzweigverbinder (12), dem ersten Spannungsabzweigverbinder (11) und der Masse (13) angeschlossen ist, wobei die Schaltung (2) zur Verteilung von Energie angeordnet ist, um eine Ladung von einer ersten Spannungsquelle (9, 10) zu einer zweiten Spannungsquelle (10, 9) zu übertragen, durch abwechselndes Erzeugen eines ersten Stromflusses durch die erste Spannungsquelle (9, 10) und die Schaltung (2) zur Verteilung von Energie in die Entladerichtung der ersten Spannungsquelle (9, 10) und eines zweiten Stromflusses durch die zweite Spannungsquelle (10, 9) und die Schaltung (2) zur Verteilung von Energie in die Laderichtung der zweiten Spannungsquelle.

2. Schaltung (2) zur Verteilung von Energie nach Anspruch 1, ferner umfassend ein Element (4) zum Speichern von Energie, welches angeordnet ist, um durch den ersten Stromfluss geladen und durch den zweiten Stromfluss entladen zu werden.

3. Schaltung (2) zur Verteilung von Energie nach Anspruch 2, wobei das Element (4) zum Speichern von Energie ein Induktor ist.

4. Schaltung (2) zur Verteilung von Energie nach einem beliebigen der vorhergehenden Ansprüche, wobei die Schaltung (2) zur Verteilung von Energie mit einer Steuerungseinheit (3) versehen ist, welche angeordnet ist, um die Wechselfolge zwischen dem ersten Stromfluss und dem zweiten Stromfluss zu steuern.

5. Schaltung (2) zur Verteilung von Energie nach Anspruch 4, wobei die Wechselfolge zwischen dem ersten Stromfluss und dem zweiten Stromfluss mit einer Frequenz von mindestens 5 kHz erfolgt.

6. Schaltung (2) zur Verteilung von Energie nach Anspruch 4 oder 5, ferner umfassend zwei Schalter (5, 6), von denen jeder mit einer Diode (7, 8) versehen oder verbunden ist, wobei die Steuerungseinheit (3) durch abwechselndes Schließen und Trennen der Schalter (5, 6) zwischen dem ersten Stromfluss und den zweiten Stromfluss wechselt.

7. Schaltung (2) zur Verteilung von Energie nach Anspruch 6, wobei die beiden Schalter (5, 6) zwei Leistungstransistoren sind.

8. Schaltung (2) zur Verteilung von Energie nach Anspruch 4 bis 7, wobei die Steuerungseinheit (3) angeordnet ist, um von den beiden Spannungsquellen (9, 10) zwei Spannungswerte zu erhalten, zu ermitteln, ob jeweils eine Differenz zwischen der Durchschnittsspannung über die Zellen in den Spannungsquellen (9, 10) existiert, und, falls eine derartige Differenz existiert, eine Übertragung einer Ladung von der Spannungsquelle (9, 10) mit der höchsten durchschnittlichen Zellenspannung zu der Spannungsquelle (9, 10) mit der niedrigsten durchschnittlichen Zellenspannung zu steuern, so dass die Zellen in beiden Spannungsquellen (9, 10) eine im Wesentlichen gleiche durchschnittliche Spannung erhalten.

9. Schaltung (2) zur Verteilung von Energie nach Anspruch 4 bis 7, wobei die Steuerungseinheit (3) angeordnet ist, um zu ermitteln, ob eine plötzliche Änderung des Speisestroms in dem zweiten Spannungsabzweigverbinder (12) vorliegt, und, falls eine derartige plötzliche Änderung vorliegt, eine Übertragung einer Ladung von der Spannungsquelle (10) zwischen dem ersten (11) und dem zweiten Spannungsabzweigverbinder (12) zu der Spannungsquelle (9) zwischen dem ersten Spannungsabzweigverbinder (11) und der Masse zu steuern, so dass die Spannung über der Spannungsquelle (9), die zwischen dem ersten Spannungsabzweigverbinder (11) und der Masse (13) angeordnet ist, während eines bestimmten Zeitraums eine kontinuierliche Veränderung erfährt.

10. Schaltung (2) zur Verteilung von Energie nach Anspruch 9, wobei die Steuerungseinheit (3) angeordnet ist, um durch Erhalten von mindestens zwei aufeinanderfolgenden Spannungswerten von dem zweiten Spannungsabzweigverbinder (12) über ein Strommessinstrument (20) die Änderung des Speisestroms zu ermitteln.

11. Schaltung (2) zur Verteilung von Energie nach Anspruch 9, wobei die Steuerungseinheit (3) angeordnet ist, um durch Erhalten von mindestens zwei aufeinanderfolgenden Spannungswerten von der Spannungsquelle (9), die zwischen dem ersten Spannungsabzweigverbinder (11) und der Masse (13) angeordnet ist, die Änderung des Speisestroms zu ermitteln.

12. Schaltung (2) zur Verteilung von Energie nach einem beliebigen der Ansprüche 9 bis 11, wobei die kontinuierliche Änderung während 2-10 Sekunden stattfindet.

13. Elektrische Anlage (1; 1'), umfassend zwei Spannungsquellen (9, 10), wobei ein erster Spannungsabzweigverbinder (11) zwischen den beiden Spannungsquellen (9, 10) angeschlossen ist und ein zweiter Spannungsabzweigverbinder (12) an die Spannungsquellen (9, 10) angeschlossen ist, so dass er bei Gebrauch einen höheren Spannungspegel als der erste Spannungsabzweigverbinder (11) aufweist, und einen Generator (14; 14'), wobei der Generator (14; 14') an den ersten (11) oder den zweiten Spannungsabzweigverbinder (12) angeschlossen ist, **dadurch gekennzeichnet, dass** eine Schaltung (2) zur Verteilung von Energie nach einem beliebigen der vorhergehenden Ansprüche zwischen dem ersten Spannungsabzweigverbinder (11), dem zweiten Spannungsabzweigverbinder (12) und dem Masseverbinder (13) angeschlossen ist.

14. Elektrische Anlage nach Anspruch 13, wobei die Spannungsquellen (9, 10) Bleiakkus umfassen.

## Revendications

1. Circuit (2) pour la distribution d'énergie pour un système électrique (1 ; 1') dans un véhicule à moteur, le système comprenant :
deux sources de tension (9, 10) connectées en série, où un premier connecteur de dérivation de tension (11) est relié entre les deux sources de tension (9, 10) et un deuxième connecteur de dérivation de tension (12) est relié aux sources de tension (9, 10) de manière à avoir un niveau de tension plus élevé que le premier connecteur de dérivation de tension (11) pendant l'utilisation, **caractérisé en ce que**
ledit circuit (2) pour la distribution d'énergie est relié entre le deuxième connecteur de dérivation de tension (12), le premier connecteur de dérivation de tension (11) et la terre (13), où ledit circuit (2) pour la distribution d'énergie est conçu pour transmettre une charge d'une première source d'énergie (9, 10) à une deuxième source d'énergie (10, 9), en créant alternativement un premier flux de courant à travers la première source d'énergie (9, 10) et le circuit (2) pour la distribution d'énergie dans la direction de décharge de la première source d'énergie (9, 10), et un deuxième flux de courant à travers la deuxième source d'énergie (10, 9) et le circuit (2) pour la distribution d'énergie dans la direction de charge de la deuxième source d'énergie.

2. Circuit (2) pour la distribution d'énergie selon la revendication 1, comprenant en outre un élément (4) pour le stockage de l'énergie, qui est conçu pour être chargé par le premier flux de courant et pour être déchargé par le deuxième flux de courant.

3. Circuit (2) pour la distribution d'énergie selon la revendication 2, dans lequel ledit élément (4) pour le stockage de l'énergie est un inducteur.

4. Circuit (2) pour la distribution d'énergie selon l'une quelconque des revendications précédentes, dans lequel ledit circuit (2) pour la distribution d'énergie est pourvu d'une unité de contrôle (3) conçue pour contrôler l'alternance entre le premier flux de courant et le deuxième flux de courant.

5. Circuit (2) pour la distribution d'énergie selon la revendication 4, dans lequel ladite alternance entre le premier flux de courant et le deuxième flux de courant a lieu à une fréquence d'au moins 5 kHz.

6. Circuit (2) pour la distribution d'énergie selon la revendication 4 ou 5, comprenant en outre deux interrupteurs (5, 6), parmi lesquels chacun est pourvu d'une diode (7, 8) ou relié à une diode, où ladite unité de contrôle (3) alterne entre le premier flux de courant et le deuxième flux de courant, en connectant et en déconnectant alternativement les interrupteurs (5, 6).

7. Circuit (2) pour la distribution d'énergie selon la revendication 6, dans lequel lesdits deux interrupteurs (5, 6) sont deux transistors de puissance.

8. Circuit (2) pour la distribution d'énergie selon les revendications 4 à 7, dans lequel ladite unité de contrôle (3) est conçue pour recevoir deux valeurs de tension à partir des deux sources de tension (9, 10), déterminer s'il existe une différence entre la tension moyenne sur les cellules dans les sources de tension (9, 10), respectivement, et si une telle différence existe, contrôler la transmission de la charge venant de la source de tension (9, 10) avec la tension de cellule moyenne la plus élevée à la source de tension (9, 10) avec la tension de cellule moyenne la plus basse, de sorte que les cellules dans les deux sources de tension (9, 10) reçoivent quasiment la même tension moyenne.

9. Circuit (2) pour la distribution d'énergie selon les revendications 4 à 7, dans lequel ladite unité de contrôle (3) est conçue pour détecter un changement soudain dans le courant d'alimentation dans le deuxième connecteur de dérivation de tension (12), et, en présence d'un tel changement, contrôler une transmission de charge de la source de tension (10) entre le premier (11) et le deuxième connecteur de dérivation de tension (12) à la source de tension (9) entre le premier connecteur de dérivation de tension (11) et la terre, de sorte que la tension sur la source de tension (9) agencée entre le premier connecteur de dérivation de tension (11) et la terre (13) pour une période déterminée présente un changement continu.

10. Circuit (2) pour la distribution d'énergie selon la revendication 9, dans lequel ladite unité de contrôle (3) est conçue pour détecter ledit changement dans le courant d'alimentation en recevant au moins deux valeurs de tension successives du deuxième connecteur de dérivation de tension (12) par le biais d'un instrument de mesure du courant (20).

11. Circuit (2) pour la distribution d'énergie selon la revendication 9, dans lequel ladite unité de contrôle (3) est conçue pour détecter ledit changement dans le courant d'alimentation en recevant au moins deux valeurs de tension successives de la source de tension (9) agencée entre le premier connecteur de dérivation de tension (11) et la terre (13).

12. Circuit (2) pour la distribution d'énergie selon l'une quelconque des revendications 9 à 11, dans lequel ledit changement continu dure 2 à 10 secondes.

13. Système électrique (1 ; 1') comprenant deux sources de tension (9, 10), dans lequel un premier connecteur de dérivation de tension (11) est connecté entre les deux sources de tension (9, 10) et un deuxième connecteur de dérivation de tension (12) est connecté aux sources de tension (9, 10), de manière à avoir un niveau de tension plus élevé que le premier connecteur de dérivation de tension (11) pendant l'utilisation, ainsi qu'un générateur (14 ; 14'), lequel générateur (14 ; 14') est connecté au premier (11) ou au deuxième connecteur de dérivation de tension (12), **caractérisé en ce qu'**un circuit (2) pour la distribution d'énergie selon l'une quelconque des revendications précédentes est connecté entre le premier connecteur de dérivation de tension (11), le deuxième connecteur de dérivation de tension (12) et le connecteur de mise à la terre (13).

14. Système électrique selon la revendication 13, dans lequel lesdites sources de tension (9, 10) comprennent des batteries au plomb.
